# EUROPEAN PATENT SPECIFICATION

(11) **EP 0 279 536 B1**
(45) Date of publication and mention of the grant of the patent: **14.07.1993**
(21) Application number: 88300684.3
(22) Date of filing: 27.01.1988
(51) Int. Cl.: G11B 5/39, G01R 33/06

(54) **Magnetoresistive head and process for its manufacture**
Magnetoresistiver Kopf und Verfahren zu seiner Herstellung
Tête magnétorésistive et procédé pour la fabrication de la même

(30) Priority: 17.02.1987 US 15204
(43) Date of publication of application: 24.08.1988
(73) Proprietor: SEAGATE TECHNOLOGY INTERNATIONAL, Georgetown, Grand Cayman Island (KY)
(72) Inventor: Mowry, Greg Stephen, Burnsville Minnesota 55337 (US)
(74) Representative: Kenyon, Sarah Elizabeth

(56) References cited:
- EP-A- 0 100 841
- FR-A- 2 496 952
- PATENT ABSTRACTS OF JAPAN, vol. 11, no. 22 (P-538)(2469), 21 January 1987; & JP-A-61 194620

## Description

This invention relates to magnetoresistive heads, for example, for magnetic disk drives.

A typical magnetoresistive head is disclosed in JP-A-no. 61-194620. A head is disclosed having a pair or write poles (5,8), a shield (3) forming two gaps with the sensor (4) located in the gap between the shield and the trailing pole.

Magnetoresistive sensors, which are responsive to change in resistivity caused by the presence of magnetic fields, are increasingly employed as read transducers in heads of magnetic disk drives primarily because the change of resistivity is independent of disk speed, depending only on the magnetic flux, and secondarily because sensor outputs may be scaled by sense current.

Magnetoresistive sensors typically comprise a thin strip of NiFe alloy (Permalloy) magnetised along an easy axis of low coercivity. Many other ferromagnetic alloys are also candidates. The magnetoresistive sensor is usually mounted in a head such that the easy axis is transverse to the direction of rotation of a disk and parallel to the plane of the disk. The magnetic flux from the disk causes rotation of the magnetisation vector of the magnetoresistive sensor which, in turn, causes a change in resistivity to a sense current flowing between lateral contacts. The resistivity varies approximately according to the cosine-square of the angle between the magnetisation vector and the current vector, i.e.:

$\text{Δ ρ = ρ max x cos²ϑ}$

where ϑ is the angle between the magnetisation and current vectors and ρ is the resistivity.
Due to this cosine-square relationship, if the magnetisation and current vectors are initially aligned, the initial change in resistivity due to disk magnetic flux is low ad unidirectional. Typically, therefore, either the easy axis magnetisation vector or the current vector is biased to approximately 45° to increase responsiveness to angular change in the magnetisation vector and to linearise the output of the magnetoresistive sensor.

A first problem encountered with magnetoresistive sensors is Barkhausen noise caused by the irreversible motion of magnetic domains in the presence of an applied field, i.e. coherent rotation of the magnetisation vector is non-uniform and suppressed, and depends upon domain wall behaviour. This noise mechanism is eliminated by creating a single magnetic domain in a sense current region of the magnetoresistive sensor.

Many different means have been employed both to linearise the output of the magnetoresistive sensor and to provide for a single domain in the sense current region.

One known solution, to cause a single domain in the sense current region for example, is to increase the length of a magnetoresistive sensor relative to its height. Multiple closure domains are known to occur at the ends of long magnetoresistive sensors. These migrate towards the centre under the influence of external fields. However, long magnetoresistive sensors may be subject to cross talk in lateral portions thereof and may conduct magnetic flux from adjacent tracks to the sense current region of the magnetoresistive sensor. Short magnetoresistive sensors, in contrast, almost invariably spontaneously "fracture" into multiple domains.

Another known solution of providing single domains in the sense current region is by shaping the magnetoresistive sensor so as to reduce edge demagnetising fields while producing a relatively short physical dimension in the sense current region (see e.g. Figure 4a of US-A-4,503,394 where upper and lower horizontal sections with opposed easy axes are connected at the ends with vertical sections to comprise an endless loop). See also US-A-4,555,740 in which a magnetoresistive sensor has two intermediate, upwardly extending legs. However, such shaped magnetoresistive sensors suffer from a second problem in that sensors "fracture" into multiple domains in the presence of strong transverse magnetic fields. Strong transverse magnetic fields are caused by the inductive write poles between which the magnetoresistive sensors are conventionally mounted (the poles act as soft magnetic shields to isolate the magnetoresistive sensor from magnetic fields not directly adjacent thereto).

A third known solution of forming single domains is by providing a longitudinal magnetic field in "long" or shaped magnetoresistive sensors, prior to reading. Such a magnetic field has to be strong enough to cause the formation of a relatively stable, single domain in the central sense current region. This initialisation field is generally provided by a barber pole, which also has the advantage that it can be used to cant the direction of the sense current relative to the easy axis magnetic vector.

A fourth known solution, particularly for short magnetoresistive sensors, is to maintain single domains by permanent longitudinal biasing from adjacent permanent magnets or atomically coupled antiferromagnetic material which results in exchange-biasing. Such biasing is also provided, in some applications, to transverse-bias the magnetic vector away from the easy axis to linearise the output of the magnetoresistive sensor, as mentioned above.

However, both of these biasing schemes (initialisation and permanent) have the drawback in that the biasing magnetic field could adversely affect the information pre-recorded on the magnetic disk, and further, a permanent biasing field (both transverse and longitudinal) increases the effective anisotropy of the magnetoresistive sensor thereby decreasing sensitivity to disk magnetic flux. The barber pole (canted current) design has the additional disadvantage that the effective length of the magnetoresistive sensor area is less than the longitudinal distance between canted contacts of the magnetoresistive sensor. The barber pole design also requires precise lithographic processes to apply the canted contacts and shortening stripes.

Exchange-biasing is not commonly used in practice because of the presence of two dissimilar materials (the magnetoresistive material and the antiferromagnetic material) at an exposed interface. This can lead to corrosion which can destroy a head. Further, because exchange-biasing is a quantum-mechanical interaction effect, reliable atomic interaction is imperative, but such processing is difficult and yields are low. Further, the effect has a strong temperature dependence, being substantially reduced in the typical operating environments of the conventional disk drives.

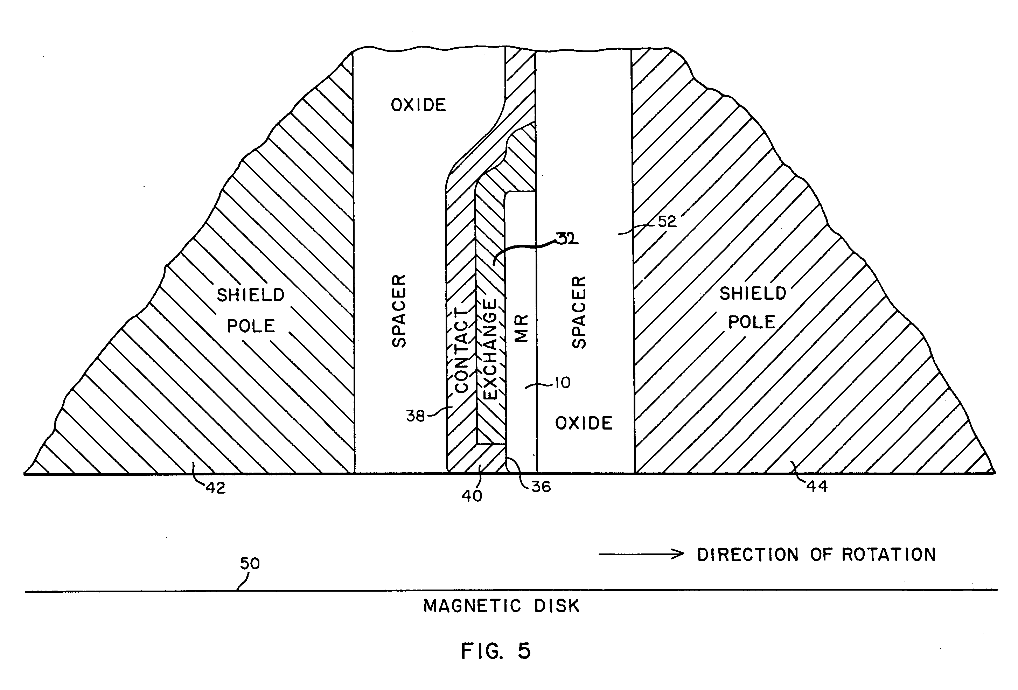

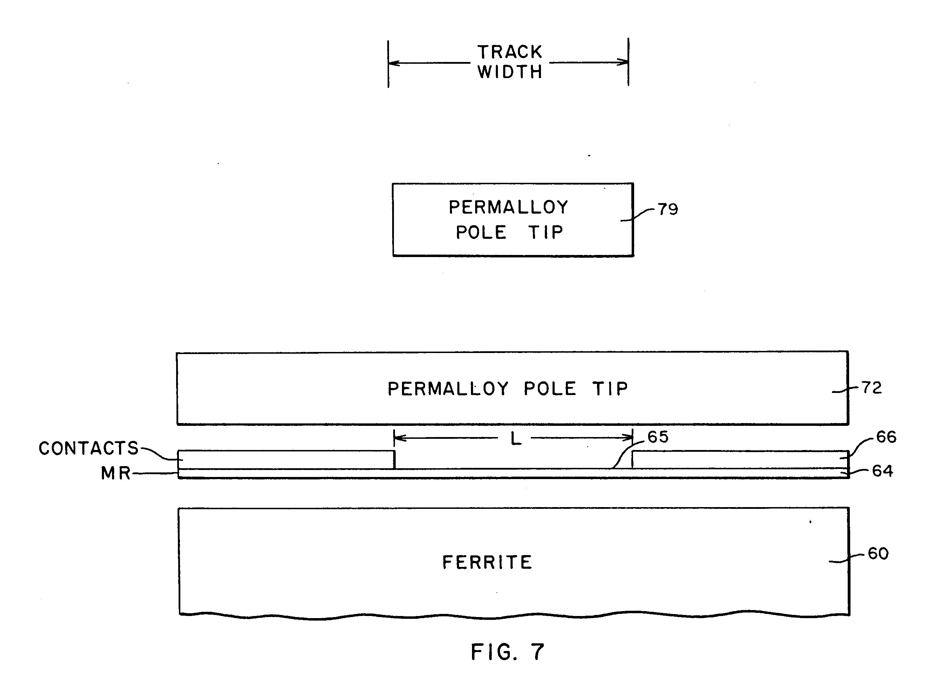

To reiterate, the existence of strong transverse magnetic fields causes relatively stable single domain regions to "fracture" into multiple domains: the source of Barkhausen noise. Strong magnetic fields are present between pole tips of the inductive write apparatus, the conventional location of most magnetoresistive sensors. To reduce the effect of the inductive write pole tips on the magnetoresistive sensor, it is known to place it along side the pole tips (see US-A-4,321,641). This type of structure requires a soft magnetic shield, a shield/trailing pole tip, and a leading pole tip. The design of US-A-4,321,641 is not entirely satisfactory, primarily due to the extension of magnetoresistive material (see Figure 4 or Figure 7) beyond a shield of a trailing pole tip.

Accordingly, an aim of the present invention is to provide a magnetoresistive head which can be positioned between the pole tips of the inductive write apparatus but reduce Barkhausen noise whilst substantially obviating the problems encountered with the aforementioned known solutions.

According to one aspect of the present invention there is provided a magnetoresistive head comprising: a pair of inductive write poles and a soft-magnetic shield forming two gaps, a first gap between the poles, a second gap between a trailing one of said poles and said shield; and a magnetoresistive sensor having central sense region mounted in said second gap; characterised in that a leading one of said poles has a length defining a track width, the central sense region is approximately the same length as the leading pole and the trailing pole has a length at least as long as the sensor.

Preferably the soft-magnetic shield is at least as long as the sensor.

The head may include two contacts electrically contacting said sensor, one each on laterally opposite sides of said central sense region, a constant current source connected between each of said contacts, and a voltage sensing circuit connected between each of said contacts.

The magnetoresistive sensor may have a pseudo-ellipsoid shape. The shape may include a flattened central sense region and lateral, pointed ends.

Exchange-bias material may be atomically coupled to said lateral pointed ends, but not the central sense region. The head may have an edge, said exchange-biasing material being spaced a short distance from the edge.

The contacts may contact respective lateral, pointed ends. Said contacts may have parallel canted surfaces in said central sense region. Alternatively, said contacts may have uncanted parallel surfaces in the central sense region.

According to another aspect of the present invention there is provided a method of making a head as claimed in any preceding claim characterised by comprising: depositing a first spacer layer of oxide on a soft magnetic substrate; depositing on said spacer layer and patterning a magnetoresistive sensor material to have two ends; depositing and patterning a layer of metal contacts to the ends of said sensor material spaced by a read gap and defining in said sensor material a central sense region; depositing a second spacer layer of oxide upon said sensor material metal contacts and first spacer layer; depositing a layer of organic polymer upon said second spacer layer; patterning said layer of organic polymer to remove it from an area adjacent said sensor material; depositing a trailing pole layer of ferromagnetic material; depositing and patterning a write gap oxide material; depositing and patterning a second layer of organic polymer; depositing and patterning a layer of metal coils over said organic polymer; depositing and patterning a third layer of organic polymer over said cells; depositing a leading pole layer of ferromagnetic material upon said second and third layers or organic polymer and said trailing pole layer and patterning said leading pole layer to remove the ferromagnetic material from all but a narrow width length at the region above said central sense region, the narrow width defining a written track width, whereby said trailing pole layer spans the sensor material from end to end and the leading pole layer has a narrow width defining a written track width above the central sense region.

The method may include covering the layers in a non-magnetic material and lapping said first end to a position defining a predetermined gap height of said leading and trailing pole layers.

The soft magnetic substrate may be ferrite, e.g. NiZn. The oxide layers may be aluminium oxide or silicon dioxide. The organic polymers may be photoresist of a polyimide.

It is noted that EP-A-0 279 537, of the same Applicant, relates to a magnetoresistive sensor and that EP-A-0 279 535, also of the same Applicant, relates to a head comprising a magnetoresistive sensor, whereby the magnetisation vector of the sensor rotates away from the sensing current vector in the presence of an external magnetic field so that the angle between these vectors is 40° - 50°.

The invention is illustrated, merely by way of example, in the accompanying drawings, in which:-
Figure 1 is an elevation of a pseudo-ellipsoidal magnetoresistive sensor according to the present invention;
Figure 2 is an elongated magnetoresistive sensor according to the present invention having upwardly projecting ends with exchange-biasing material;
Figure 3 illustrates the essential steps for depositing exchange-biasing only on the ends of a magnetoresistive sensor according to the present invention;
Figure 4 is a magnetoresistive sensor of Figure 1 having exchange-biasing material at the ends;
Figure 5 is a cross-section of a magnetoresistive head having a magnetoresistive sensor according to the present invention with recessed exchange-biasing material;
Figure 6 shows a layer structure of a double-gap magnetoresistive head with a magnetoresistive sensor according to the present invention;
Figure 7 is an elevational view of the essential elements for a double-gap magnetoresistive head with a magnetoresistive sensor according to the present invention;
Figure 8 shows a known magnetoresistive sensor with canted current contacts and electrical circuits connected thereto;
Figure 9 shows an easy axis pattern-biased magnetoresistive sensor according to the present invention and relaxed canted current contacts;
Figure 10 shows an easy axis pattern-biased pseudo-ellipsoidal magnetoresistive sensor according to the present invention;
Figure 11 shows the relative response of a magnetoresistive sensor according to the present invention in linear and non-liner modes; and
Figure 12 is a pseudo-ellipsoidal magnetoresistive sensor according to the present invention having uncanted contacts for a non-linear response.

In the drawings, like parts have been designated by the same reference numerals.

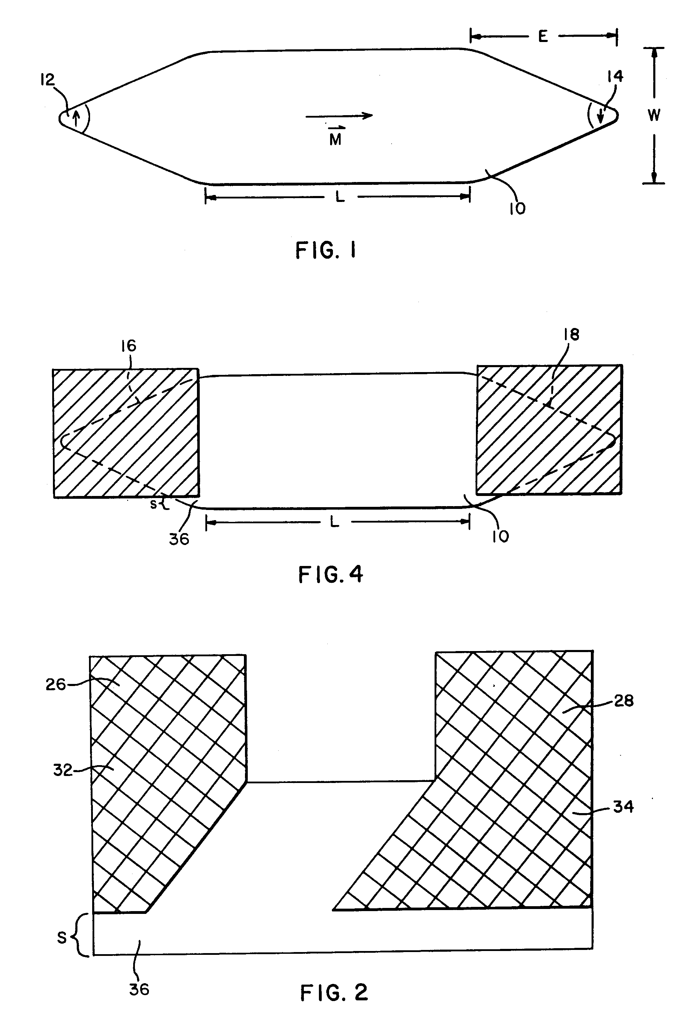

Figure 1 in this elevation view shows a pseudo-ellipsoidal magnetoresistive sensor 10 magnetised along the easy axis M. A central sense region L has relatively flat sides, rather than curved as in a true ellipse. The aspect ratio, AR, of overall length to height is less than 3, but can be greater with no loss of effect. From the central region L, the sides converge to apexes in which small magnetic domains 12,14 spontaneously form. Preferably W ≦ L and E (the length of an apex) is of the order of L at a minimum, having no known maximum. The structure forms a very stable central region single domain indicated by the large rightwardly directed arrow.

Experimentation with this structure shows that a thin layer of 200-500 angstroms Ni: 82Fe: 18 alloy, with an overall length of 25 microns, a central region L of 9 microns, and a width W of 8 microns requires 35 Oe to switch the magnetisation vector of the central region to the hard axis, while only 0.75 Oe is required in an unpatterned bulk film. This translates to a factor of 46 improvement.

Where high transverse fields can be expected, such as when an unshielded magnetoresistive sensor is placed between or next to the poles of an inductive write head, longitudinal biasing is still required to initialise or maintain a single domain state. As hitherto discussed, there are many different means for accomplishing this. For example, barber pole biasing generates a longitudinal field. In addition permanent magnetic biasing or exchange-biasing can also provide a longitudinal field. A novel stabilisation means is disclosed in Figure 4.

Prior exchange stabilisation/biasing techniques have been typically prepared by first depositing a ferromagnetic layer upon a substrate and then depositing an antiferromagnetic layer upon the ferromagnetic layer such that, after patterning, the two layers coincide.

Exchange-biasing can result in a signal loss due to shunting effects. Longitudinal exchange fields have a negative temperature dependence. Finally, the possibility exists of corrosion due to bimetallic film structure.

The domain stabilisation process can be understood by recognising that if the magnetisation is pinned at the boundaries of a thin film strip then the equilibrium magnetisation direction can be controlled in the central region between the boundaries. By depositing FeMn in crosshatched regions 16,18 shown in Figure 4, the previously indicated drawbacks to standard exchange-biasing techniques can be avoided. First, since there is no exchange bias material in the central region L, there can be no signal loss due to current shunting. Secondly, this stabilisation technique is extremely temperature insensitive since the requirement is made that only the direction of the magnetisation be fixed: not the magnitude of the longitudinal exchange field. Finally, by proper patterning, the bimetallic interface can be eliminated at any exposed edge. Preferably the exchange bias material used is FeMn because of its electrical conductivity.

An embodiment of the magnetoresistive sensor having a stable single domain central region employing exchange-biased ends is shown in Figure 2. Here, the magnetised alloy strip has a C-shape with a relatively narrow central region and with the lateral ends having upwardly extending legs 26,28 for conducting the demagnetising field further away from the central region. This improves the stability of the single domain in the central region. Exchange-bias material 32,34 and contact metallisation (not shown) are applied to these ends which generally conforms to the pattern of canted current end contacts (not shown). This pattern of exchange-bias material eliminates edge and end domains and provides a stable central single domain sense current region. To avoid the aforementioned corrosion problem at exposed interfaces, a recess 36 with a width S is provided between the exchange-bias material and a lower edge of the magnetoresistive sensor 10, the lower edge being that exposed to the magnetic disk in most designs.

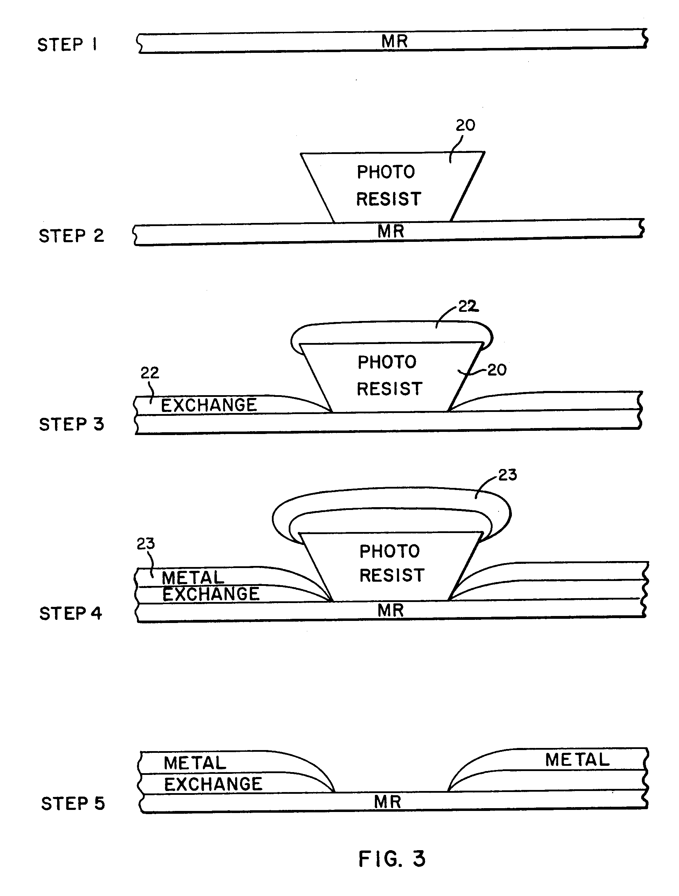

The process for forming the structure shown in Figure 2 is shown in Figure 3. Step 1: a strip of magnetoresistive material Mr is evaporated, sputtered or the like on a substrate (not shown for the purpose of clarity), in a uniform magnetic field directed along an easy axis, and patterned. Step 2: a photo resist layer 20 is laid down and patterned using conventional processes to form an island with inwardly inclined sides. Step 3: exchange-bias material 22 is evaporated, sputtered or the like onto the magnetoresistive material Mr and the photo resist layer 20. Step 4: contact metallisation 23 is deposited. Step 5: using a lift-off process, the photo resist layer 20 with the exchange-bias material 22 and metallisation 23 thereon are removed.

The pseudo-ellipsoidal magnetoresistive sensor with exchange-bias material on its ends extending to a flattened central region L as shown in figure 4 is also formed by the process shown in figure 3.

Figure 5 shows a vertical cross-section of the exchange-biased magnetoresistive sensor 10 of either figure 2 or figure 4 mounted between shields 42,44 above a magnetic disk 50. The exchange-bias material 32 is recessed a short distance above a lower surface of the magnetoresistive element adjacent to the magnetic disk 50 to form the recess 36 and contact metal 38 has a leg 40 extending to the lower edge of the magnetoresistive sensor 10 to shield the exchange-bias material 32 from exposure. At least one of the shields 42,44 also comprises one of the poles of an inductive write apparatus (not shown). The shields are separated via spacers 52 typically composed of a non-magnetic material such as AL₂O₃. By providing the recess 36, the contact material 38 has the leg 40 directly contacting the lower surface of the magnetoresistive sensor 10. This shields the exchange-bias material 32 from exposure. Most heads land on the surface of the magnetic disk 50 when disk rotation stops, burnishing small amounts of the head material away. The amount of the recess 36 versus the degree of burnishing determines the lifetime of the head until the exchange-bias material is exposed leading to potential corrosion.

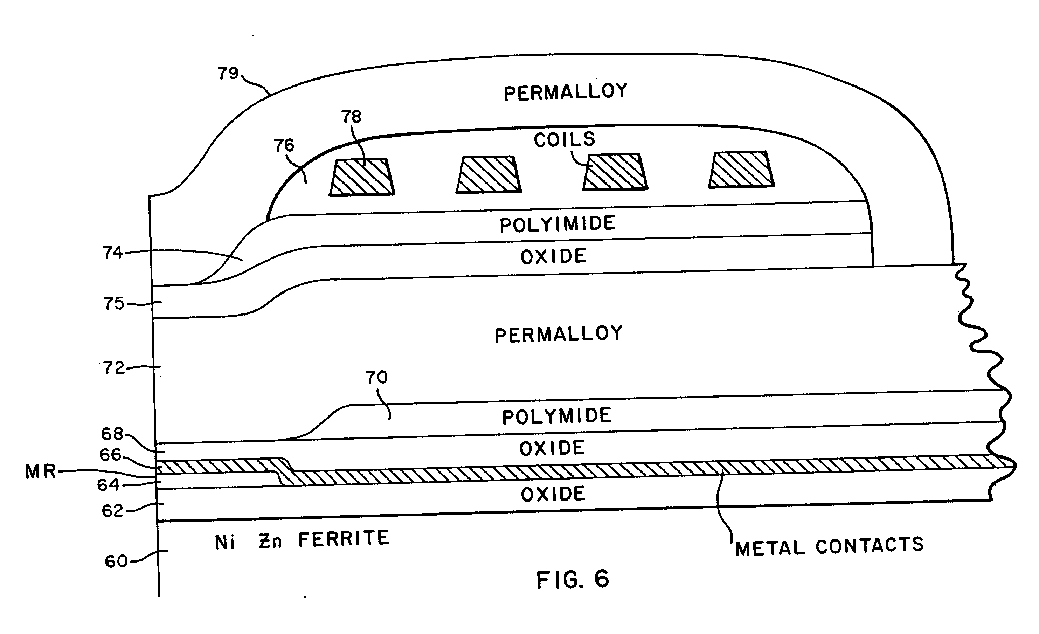

The magnetorestive head shown in Figures 6 and 7 hereof provides a very magnetically quiet region for the magnetoresistive sensor. The residual flux from the magnetic poles of the inductive write apparatus is so low as to permit the reliable operation of very stable, shaped, single domain sensors (e.g. the pseudo-ellipse magnetoresistive sensor 10 of Figure 1) without longitudinal biasing.

Figure 6 is a cross-section of the essential elements of a magnetoresistive sensor. A layer 62 of oxide, preferably aluminium oxide, is deposited upon a soft magnetic substrate 60, preferably NiZn. Next, magnetoresistive sensor material 64 is deposited in a magnetic field and patterned. Exchange-bias material may then be deposited and patterned if desired. Metal contacts 66 are then deposited on the magnetoresistive sensor material 64. A second layer of oxide 68 is then deposited. The two oxide layers 62,68 comprise a read gap. A layer of polyimide or photo resist 70 is then deposited and patterned as shown to remove the layer adjacent a gap end of the magnetoresistive head. Next a layer 72 of ferromagnetic material is laid down, preferably of NiFe (Permalloy). This layer 72 comprises a trailing pole/shield. Next, a write gap oxide layer 75 of, for example, aluminium oxide or silicon dioxide, is deposited followed by a second layer 74 of polyimide or photo resist. Metal coils 78 are deposited and patterned. Two layers 76 of polyimide or photo resist are deposited and patterned to remove the portion not adjacent the coils 78. Finally, a final layer 79 of a ferromagnetic material comprises the leading pole/shield and is deposited to encompass the coils and contact the layer 72 to form a continuous flux path. After the magnetoresistive sensor is formed, it is typically sealed in a suitable non-magnetic material and the gap end processed, e.g. by lapping to expose the end gap or gaps and providing a reliable gap height.

Figure 7 is an end view of the essential elements of a magnetoresistive sensor. Spacing layers are omitted for clarity. Shown in the Figure are the substrate 60, the magnetoresistive sensor material 64, its lateral metal contact 66 defining a central sense current region 65 of length L, and the ferromagnetic trailing pole/shield 72, and the leading pole/shield 79. The length of the leading pole/shield 79 defines the written track width via magnetic mirroring with the trailing pole/shield 72. This length corresponds to the length L (plus a processing guard band wherein the length L is intentionally made smaller than the written track width to avoid possible cross talk) of the central sense current region 65 of the magnetoresistive sensor material 64. Typically, the magnetoresistive sensor material is longer than a track width to assist in providing a stable single domain in the central sense current region 65. It is essential that the trailing pole/shield 72 is as long as the magnetoresistive sensor material 64 to shield it completely from side fringing fields originating during the writing process. This makes the leading and trailing poles/shields 79,72 of different lengths. However, it has been discovered that this does not affect the written track width, which is defined by the length of the leading pole/shield 79 and the above mentioned mirroring effects.

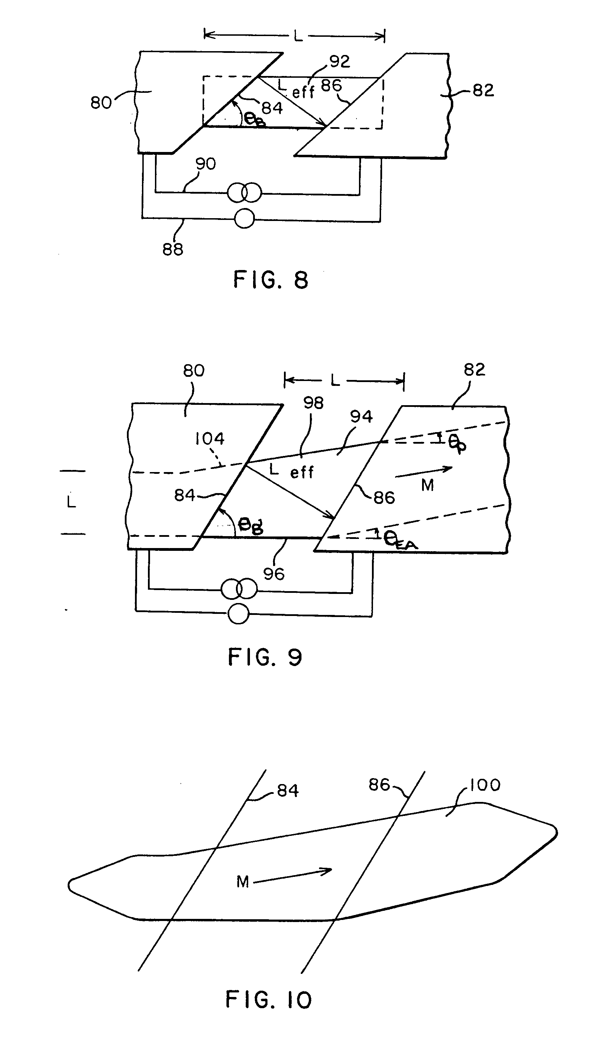

For many applications, such as audio applications, linear operation of a magnetoresistive sensor is desirable. As mentioned above, linearisation either requires the canting of the easy axis magnetisation vector or the canting of the current vector. Canting of the magnetisation vector typically increases anisotropy and reduces the range of resistivity change and thus sensitivity of the magnetoresistive sensor. Canting the current likewise causes a comparable loss in sensitivity as better illustrated in Figure 8.

Figure 8 shows a typical canted current biasing technique wherein conductors 80,82, intimately contacting a magnetoresistive strip 92 of length L provide a canted current from a source 88 generally in the direction L_{eff} between the contacts. The current direction is generally perpendicular to the surfaces 84,86 of the conductors. These surfaces are generally canted at an angle of ϑ_{B} of between 40° and 45° for greatest linearity and sensitivity. The change in resistivity is sensed by means 90 (which can be a voltage sensor if the source 88 is a constant current source, a transimpedance current sensor if the source 88 is a constant voltage source, or a power sensor if the source 88 is a "soft" source). The change in resistivity is generally proportional to the length L_{eff} which is less than the length L between the conductors in the longitudinal direction. The length L, in turn, is approximately the track width of one track and defines the length of the sense current region. Thus, the sensitivity of the magnetoresistive sensor is reduced by the ratio L_{eff}/L. Making L_{eff} comparable to track width is not desirable because the length L would then be long enough to pick up significant cross talk from adjacent tracks.

Figure 9 shows an improved canted magnetoresistive sensor 94 according to the present invention which relaxes the cant of the surfaces 84,86 of the contacts 80,82 to an angle ϑ_{Bʹ} of approximately 50°. This substantially increases L_{eff} and thereby sensitivity while maintaining the approximately 40° to 45° angle with the easy axis. The reason for this is that the magnetoresistive sensor is patterned such that its easy axis is itself canted by an angle ϑ_{EA} of approximately 10°.

The surfaces 84,86 are each canted at an angle ϑ_{B}, which is preferably 50°. A lower edge 96 of the magnetoresistive sensor is parallel to the magnetic disk surface as in the prior art but an upper edge 98 is patterned at an angle of ϑ_{P} thereto to give a resultant easy axis magnetisation vector M at an angle ϑ_{EA} of approximately 10° to the lower edge 96.

The magnetoresistive sensor 94 is formed from a bulk film deposited on a suitable substrate in an uniform magnetic field directed parallel to the lower edge 96. The bulk film is thereafter patterned using conventional lithographic techniques to form the pattern illustrated with the upper edge 98 forming an upwardly extending angle with the lower edge 96. This shape inherently cants the easy axis magnetisation vector M upwards, though to a lesser degree than the angle of the upper edge 98. To achieve the net easy axis rotation of 10° it will be appreciated that the strength of the undeflected easy axis vector with the size, length, thickness, and composition of the magnetoresistive material with the angle of the upper edge to the lower edge will have to be balanced.

In this embodiment, the magnetoresistive sensor 94 is composed of 80:20 NiFe alloy, approximately 500 angstroms thick, with L approximately equal to 9 microns, h (the height of the magnetoresistive sensor at a point 104) approximately equal to 8 microns, and ϑ_{P} is 10°, ϑ_{B}, is 50° and ϑ_{EA} is 10°. Figure 10 shows an example of a canted easy axis pseudo-ellipsoidal magnetoresistive sensor 100 and its relative orientation with surfaces 84,86 (the conductors 80,82 are not shown in Figure 10).

For most digital applications, data is written on the disk in code (e.g. variable length 2,7) where only the location of a transition (pulse peak) rather than its direction and magnitude is important. Pulse amplitude serves the function of triggering qualifiers to discern between signal and noise. Thus exception for improved initial sensitivity to magnetisation vector rotation, there is no good reason to operate the magnetoresistive sensor linearly. Thus the final improvements to the magnetoresistive sensor are to provide no transverse biasing at all, except perhaps the patterned-biasing just described, operate the magnetoresistive sensor in a non-linear mode and design the magnetoresistive sensor and disk flux such that the magnetisation vector rotation in response to disk flux is of the order of 40° to 50°.

Because the location of a transition (pulse peak) is important, the signal from the disk is conventionally differentiated and the zero crossing detected. Noise makes the location of the zero crossing uncertain, and for this reason, noise ultimately limits the data density. However, by not biasing the magnetoresistive sensor, it will operate in its non-linear mode and the differential will have a steeper zero crossing slope than that of a linearly biased magnetoresistive sensor. This increased zero crossing slope leads to less sensitivity to noise, and to a more accurate detection of zero crossing locations, all other things being equal.

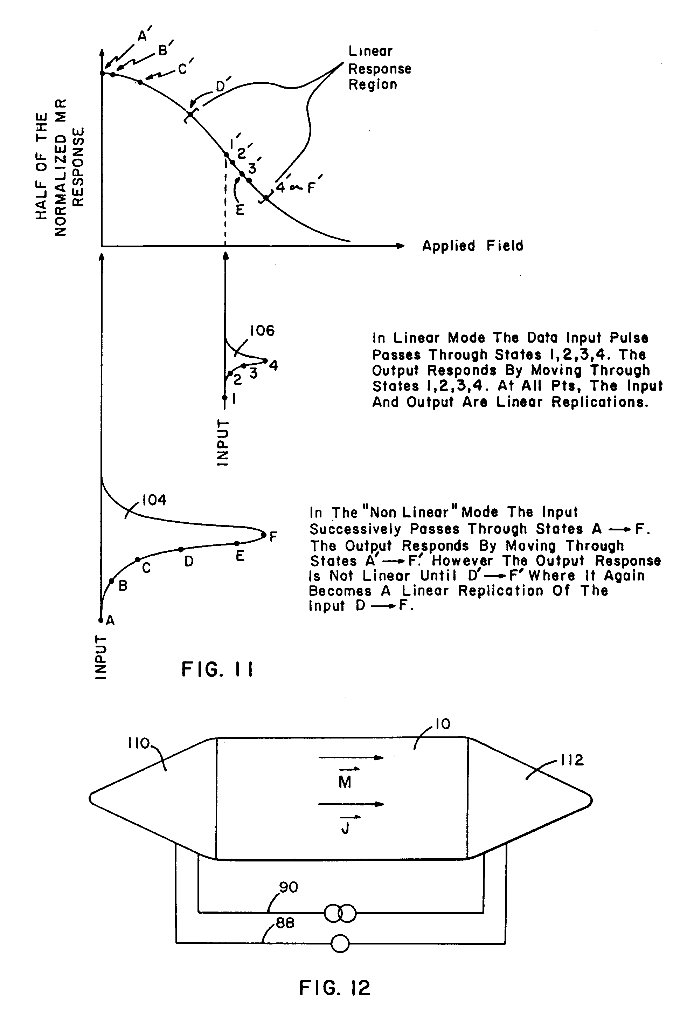

In order to achieve a proper non-linear signal out of the magnetoresistive sensor, the magnetisation vector must be made to rotate to a greater degree than in the biased case (see Figure 11 for an illustration of the principle). The upper portion of Figure 11 shows graphically half the normalised magnetoresistive response. The lower portion of Figure 11 shows graphically two disk flux input signals 104,106, the signal 104 representing the input signal to a non-linear magnetoresistive sensor, and the signal 106 representing the input to a linear magnetoresistive sensor. While the two signals 104,106 are shown with greatly different magnitudes, they may actually be of the same magnitude if the relative response of the magnetoresistive sensor is proportional to the relative difference shown. Actually, it may be preferable to adjust the relative response of both the disk and the magnetoresistive sensor.

In a linear mode of operation, the signal 106 passes through states 1, 2, 3 and 4 and the magnetoresistive sensor responds by moving through resistivity states 1ʹ, 2ʹ, 3ʹ and 4ʹ (for an oppositely polarised pulse, the states would be on the opposite side of the state 1ʹ). For all states, the inputs and outputs are linear replications.

In a non-linear mode, the signal 104 passes through states A to F and the sensor responds with states Aʹ to Fʹ (an oppositely polarised signal pulse would result in the same output, but from the other half of the resistivity curve). The output is non-linear until region Dʹ to Fʹ, where it again becomes a linear replication.

It can be seen from Figure 11 that the total response of the non-linear magnetoresistive sensor (from Aʹ to Fʹ) is greater than the total response from the linear magnetoresistive sensor (from 1ʹ to 4ʹ). Thus total sensitivity is greater, and transition centres (pulse peaks) can be more accurately located. Actual output of the magnetoresistive sensor is increased by 25 to 30%.

While there are many possible choices of materials to achieve the response indicated in Figure 11, the preferred choice is a magnetoresistive sensor comprised of permalloy and a magnetic disk material with sufficient flux to yield the magnetisation vector rotation indicated with a magnetoresistive sensor mounted on a conventional head.

Figure 12 shows a magnetoresistive sensor 10 of psuedo-ellipsoidal shape with contacts 84,86, a constant current source 88 and a voltage sensor 90. This magnetoresistive sensor is preferably mounted in the double gap head of Figures 6 and 7. By providing no biasing whatsoever, the sensor operates in a non-linear mode. Its shape and location in the shielded second gap of the double gap head maintains the magnetoresistive sensor in a single domain state. If this implementation is not robust enough for a given application, then stability can be further enhanced by providing exchange material in regions 110,112 as previously described.

It will be appreciated that, as in Figure 9, the other illustrated embodiments of the present invention have the easy magnetisation axis canted upwardly from a line parallel to a lower edge of the magnetoresistive sensor.

## Claims

1. A magnetoresistive head comprising: a pair of inductive write poles (72,79) and a soft-magnetic shield (60) forming two gaps, a first gap between the poles, a second gap between a trailing one (72) of said poles and said shield (60); and a magnetoresistive sensor (64) having central sense region mounted in said second gap; characterised in that a leading one (79) of said poles has a length defining a track width, the central sense region is approximately the same length as the leading pole (79) and the trailing pole has a length at least as long as the sensor.

2. A head as claimed in claim 1 characterised in that the soft-magnetic shield (60) is at least as long as the sensor.

3. A head as claimed in claim 1 or 2 characterised by including two contacts (66) electrically contacting said sensor, one each on laterally opposite sides of said central sense region, a constant current source (88) connected between each of said contacts, and a voltage sensing circuit (90) connected between each of said contacts.

4. A head as claimed in any preceding claim characterised in that the magnetoresistive sensor has a pseudo-ellipsoid shape.

5. A head as claimed in claim 4 characterised in that the shape includes a flattened central sense region and lateral, pointed ends (12,14).

6. A head as claimed in claim 5 characterised in that exchange-biasing material (16,18) is atomically coupled to said lateral pointed ends, but not the central sense region.

7. A head as claimed in claim 6 characterised by the sensor having an edge (96), said exchange-biasing material (16,18) being spaced a short distance (36) from the edge.

8. A head as claimed in any of claims 5 to 7 characterised in that the contacts contact respective lateral, pointed ends.

9. A head as claimed in claim 8 characterised in that said contacts have parallel canted surfaces in said central sense region.

10. A head as claimed in claim 8 characterised in that said contacts have uncanted parallel surfaces in the central sense region.

11. A method of making a head as claimed in any preceding claim characterised by comprising: depositing a first spacer layer (62) of oxide on a soft magnetic substrate (60); depositing on said spacer layer and patterning a magnetoresistive sensor material (64) to have two ends; depositing and patterning a layer (66) of metal contacts to the ends of said sensor material spaced by a read gap and defining in said sensor material a central sense region; depositing a second spacer layer (68) of oxide upon said sensor material metal contacts and first spacer layer; depositing a layer (70) of organic polymer upon said second spacer layer (68); patterning said layer (70) of organic polymer to remove it from an area adjacent said sensor material; depositing a trailing pole layer (72) of ferromagnetic material; depositing and patterning a write gap oxide material (75); depositing and patterning a second layer (74) of organic polymer; depositing and patterning a layer of metal coils (78) over said organic polymer; depositing and patterning a third layer (76) of organic polymer over said cells; depositing a leading pole layer (79) of ferromagnetic material upon said second and third layers (74,76) or organic polymer and said trailing pole layer (72) and patterning said leading pole layer (79) to remove the ferromagnetic material from all but a narrow width length at the region above said central sense region, the narrow width defining a written track width, whereby said trailing pole layer (72) spans the sensor material from end to end and the leading pole layer (79) has a narrow width defining a written track width above the central sense region.

12. A method as claimed in claim 11 characterised by including covering the layers in a non-magnetic material and lapping said first end to a position defining a predetermined gap height of said leading and trailing pole layers (72,79).

## Patentansprüche

1. Magnetowiderstands-Kopf mit zwei induktiven Schreibpolen (72,79) und einer weichmagnetischen Abschirmung (60) zur Bildung von zwei Spalten, wobei ein erster Spalt zwischen den Polen und ein zweiter Spalt zwischen einem in Bewegungsrichtung hinteren (72) der Pole und der Abschirmung (60) liegt, und mit einem Magnetowiderstands-Sensor (64), der einen in der Mitte liegenden Sensorbereich aufweist und in dem zweiten Spalt befestigt ist,
dadurch gekennzeichnet, daß ein in Bewegungsrichtung vorderer (79) der Pole eine Länge aufweist, die eine Spurbreite definiert, wobei der in der Mitte liegende Sensorbereich angenähert die gleiche Länge wie der in Bewegungsrichtung vordere Pol (79) aufweist, während der in Bewegungsrichtung hintere Pol eine Länge aufweist, die zumindestens so groß wie die Länge des Sensors ist.

2. Kopf nach Anspruch 1,
dadurch gekennzeichnet, daß die weichmagnetische Abschirmung (60) zumindestens so lang wie der Sensor ist.

3. Kopf nach Anspruch 1 oder 2,
dadurch gekennzeichnet, daß er zwei elektrisch mit dem Sensor in Kontakt stehende Kontakte (66), jeweils eine auf einer der seitlich entgegengesetzten Seiten des in der Mitte liegenden Sensorbereichs einschließt, daß eine Konstantstromquelle (88) zwischen den beiden Kontakten angeschaltet ist, und daß eine Spannungsmeßschaltung (90) zwischen den beiden Kontakten angeschaltet ist.

4. Kopf nach einem der vorhergehenden Ansprüche,
dadurch gekennzeichnet, daß der Magnetowiderstands-Sensor eine pseudo-elliptische Form aufweist.

5. Kopf nach Anspruch 4,
dadurch gekennzeichnet, daß die Form einen abgeflachten in der Mitte liegenden Sensorbereich und seitliche zugespitzte Enden (12,14) einschließt.

6. Kopf nach Anspruch 5,
dadurch gekennzeichnet, daß Austausch-Vormagnetisierungsmaterial (16,18) mit den seitlichen zugespitzten Enden, nicht jedoch mit dem in der Mitte liegenden Sensorbereich atomgekoppelt ist.

7. Kopf nach Anspruch 6,
dadurch gekennzeichnet, daß der Sensor eine Kante (96) aufweist, und daß das Austausch-Vormagnetisierungsmaterial (16,18) über eine kurze Strecke (36) gegenüber der Kante zurückversetzt ist.

8. Kopf nach einem der Ansprüche 5 bis 7,
dadurch gekennzeichnet, daß die Kontakte mit jeweiligen seitlichen zugespitzten Enden in Kontakt stehen.

9. Kopf nach Anspruch 8,
dadurch gekennzeichnet, daß die Kontakte parallele verkantete Oberflächen in dem in der Mitte liegenden Sensorbereich aufweisen.

10. Kopf nach Anspruch 8,
dadurch gekennzeichnet, daß die Kontakte unverkantete parallele Oberflächen in dem in der Mitte liegenden Sensorbereich aufweisen.

11. Verfahren zur Herstellung eines Kopfes nach einem der vorhergehenden Ansprüche,
gekennzeichnet durch die folgenden Schritte: Abscheiden einer ersten Abstandsschicht (62) aus Oxyd auf ein weichmagnetisches Substrat (60); Abscheiden eines Magnetowiderstands-Sensormaterials (64) auf die Abstandsschicht und Formgebung dieses Sensormaterials derart, daß es zwei Enden aufweist; Abscheiden und Formgebung einer Schicht (66) aus Metallkontakten auf die Enden des Sensormaterials, wobei die Metallkontakte durch einen Lesespalt getrennt sind und in dem Sensormaterial einen in der Mitte liegenden Sensorbereich festlegen; Abscheiden einer zweiten Abstandsschicht (68) aus Oxyd auf das Sensormaterial, die Metallkontakte und die ersten Abstandsschicht; Abscheiden einer Schicht (70) aus organischem Polymermaterial auf die zweite Abstandsschicht (68); Formgebung der Schicht (70) aus organischem Polymermaterial, um dieses von einem Bereich benachbart zu dem Sensormaterial zu entfernen; Abscheiden einer Schicht (72) aus ferromagnetischem Material für einen in Bewegungsrichtung hinteren Pol; Abscheiden und Formgebung eines Schreibspalt-Oxydmaterials (75); Abscheiden und Formgebung einer zweiten Schicht (74) aus organischem Polymermaterial; Abscheiden und Formgebung einer Schicht von Metallspulen (78) über dem organischen Polymermaterial; Abscheiden und Formgebung einer dritten Schicht (76) aus organischem Polymermaterial über die Spulen; Abscheiden einer Schicht (73) aus ferromagnetischem Material für einen in Bewegungsrichtung vorderen Pol auf die zweiten und dritten Schichten (74,76) aus organischem Polymermaterial und die Schicht (72) für den in Bewegungsrichtung hinteren Pol und Formgebung der Schicht (79) für den in Bewegungsrichtung vorderen Pol zur Entfernung des ferromagnetischen Materials mit Ausnahme einer eine schmale Breite aufweisenden Länge in dem Bereich oberhalb des in der Mitte liegenden Sensorbereiches, wobei die schmale Breite eine Schreibspurbreite festlegt, wobei die Schicht (72) für den hinteren Pol das Sensormaterial von Ende zu Ende überspannt und die Schicht (79) des vorderen Pols eine schmale Breite aufweist, die eine Schreibspurbreite oberhalb des in der Mitte liegenden Sensorbereichs festlegt.

12. Verfahren nach Anspruch 11,
dadurch gekennzeichnet, daß es die Einbettung der Schichten in einem nichtmagnetischen Material und das Läppen des ersten Endes auf eine Position einschließt, die eine vorgegebene Spalthöhe der vorderen und hinteren Polschichten (72,79) festlegt.

## Revendications

1. Tête à magnétorésistance comprenant : une paire de pôles d'enregistrement inductifs (72, 79) et un écran à magnétisme doux (60) formant deux entrefers, un premier entrefer entre les pôles, et un second entrefer entre celui (72) desdits pôles qui est le pôle arrière et l'écran (60) ; et un capteur à magnétorésistance (64) possédant une région sensible centrale montée dans ledit second entrefer, caractérisée en ce que celui (79) desdits pôles qui est le pôle avant possède une longueur définissant une largeur de piste, ladite région sensible centrale est approximativement de même longueur que le pôle avant (79) et le pôle arrière a une longueur au moins aussi grande que le capteur.

2. Tête selon la revendication 1, caractérisée en ce que l'écran à magnétisme doux (60) est au moins aussi long que le capteur.

3. Tête selon la revendication 1 ou 2, caractérisée en ce qu'elle comprend deux contacts (66) qui sont en contact électrique avec ledit capteur, un sur chacun de deux côtés opposés latéralement de ladite région sensible centrale, une source de courant constant (88) étant connectée entre chacun desdits contacts et un circuit capteur de tension (90) connecté entre chacun desdits contacts.

4. Tête selon l'une quelconque des revendications précédentes, caractérisée en ce que le capteur à magnétorésistance a une forme pseudo-ellipsoïde.

5. Tête selon la revendication 4, caractérisée en ce que cette forme comprend une région sensible centrale aplatie et des extrémités latérales pointues (12, 14).

6. Tête selon la revendication 5, caractérisée en ce que la matière de polarisation par échange (16, 18) est couplée par liaison atomique auxdites extrémités latérales pointues mais non pas à la région sensible centrale.

7. Tête selon la revendication 6, caractérisée en ce que le capteur possède un bord (96), ladite matière de polarisation par échange (16, 18) étant placée à une petite distance (36) du bord.

8. Tête selon l'une quelconque des revendications 5 à 7, caractérisée en ce que les contacts sont respectivement en contact avec les extrémités latérales pointues.

9. Tête selon la revendication 8, caractérisée en ce que lesdits contacts ont des surfaces inclinées parallèles dans ladite région sensible centrale.

10. Tête selon la revendication 8, caractérisé en ce que lesdits contacts ont des surfaces parallèles non inclinées dans la région sensible centrale.

11. Procédé de fabrication de la tête selon l'une quelconque des revendications précédentes, caractérisé par les phases consistant à : déposer une première couche séparatrice (62) en oxyde sur un substrat (60) à magnétisme doux ; déposer sur ladite couche séparatrice et mettre en forme une matière de capteur à magnétorésistance (64) de façon que cette matière possède deux extrémités ; déposer et mettre en forme une couche (66) de contacts métalliques sur les extrémités de ladite matière de capteur, espacées d'un entrefer de lecture et définir dans ladite matière de capteur une région sensible centrale ; déposer une seconde couche séparatrice (68) en oxyde sur lesdits contacts métalliques de la matière du capteur et sur ladite première couche séparatrice ; déposer une couche (70) de polymère organique sur ladite seconde couche séparatrice ; mettre en forme ladite couche (70) de polymère organique pour l'enlever d'une région adjacente à ladite matière du capteur ; déposer une couche de pôle arrière (72) en matière ferromagnétique ; déposer et mettre en forme un oxyde d'entrefer d'enregistrement (75) ; déposer et mettre en forme une seconde couche (74) de polymère organique ; déposer et mettre en forme une couche de bobinages métalliques (78) sur ledit polymère organique ; déposer et mettre en forme une troisième couche (76) de polymère organique sur lesdits bobinages ; déposer une couche de pôle avant (79) en matière ferromagnétique sur lesdites seconde et troisième couches (74, 76) de polymère organique, et sur ladite couche de pôle arrière (72) et mettre en forme ladite couche de pôle avant (79) pour enlever la matière ferromagnétique de toute la région qui surmonte ladite région sensible centrale, à l'exception d'une longueur de faible largeur, ladite faible largeur définissant une largeur de piste enregistrée, de sorte que la couche de pôle arrière (72) recouvre la matière sensible d'une extrémité à l'autre et que la couche de pôle avant (79) présente une largeur étroite définissant une largeur de piste enregistrée au-dessus de la région sensible centrale.

12. Procédé selon la revendication 11, caractérisé en ce qu'il comporte la phase consistant à recouvrir les couches dans une matière non magnétique et faire chevaucher ladite première extrémité jusqu'à une position définissant une hauteur d'entrefer prédéterminée desdites couches de pôle avant et arrière (72, 79).
